# EUROPEAN PATENT APPLICATION

(11) **EP 4 495 590 A1**
(43) Date of publication of application: **22.01.2025**
(21) Application number: 22932278.9
(22) Date of filing: 24.08.2022
(51) Int. Cl.: G01N 27/62, G01N 30/02, G01N 30/26, G01N 30/72, G01N 30/88

(54) **HYPOCHLORITE ION MEASUREMENT METHOD**

(30) Priority: 16.03.2022 JP 2022041489
(71) Applicant: SHIMADZU CORPORATION, Kyoto-shi, Kyoto 604-8511 (JP)
(72) Inventor: MASUDA, Junichi, Kyoto-shi, Kyoto 604-8511 (JP); MINAMIMOTO, Ayaka, Kyoto-shi, Kyoto 604-8511 (JP)
(74) Representative: Müller-Boré & Partner Patentanwälte PartG mbB
(86) International application number: PCT/JP2022/031785
(87) International publication number: WO 2023/176015

(57) **Abstract**

Provided is a method for measuring a measurement sample containing a hypochlorite ion by liquid chromatography mass spectrometry, the method including selecting a mass chromatogram indicating the presence of a hypochlorite ion-derived iron complex from a plurality of mass chromatograms obtained by liquid chromatography mass spectrometry to determine an abundance of the hypochlorite ion.

## Description

### TECHNICAL FIELD

The present invention relates to a hypochlorite ion measurement method.

### BACKGROUND ART

Hypochlorous acid-based aqueous solutions releasing hypochlorite ions, such as hypochlorous acid water and sodium hypochlorite water, have a bactericidal action and an oxidation action, and thus are used for various use applications. For example, sodium hypochlorite water is mainly used as a microbicide for water and sewerage or pools, a bleaching agent for containers, and the like from the viewpoint of a strong oxidation action, and hypochlorous acid water is mainly used as a disinfectant for hands, a cleaning agent for vegetables (food additive), and the like from the viewpoint of high safety.

Since the hypochlorous acid-based aqueous solution generates chlorines in the aqueous solution, these concentrations are generally indicated as effective chlorine concentrations. As a method for measuring the effective chlorine concentration, a titration method has been conventionally used (see, for example, Patent Document 1). For example, an iodometric oxidation-reduction titration method is described as an official method such as a food additive testing method defined by the Ministry of Health, Labour and Welfare. This method is a method for quantifying liberated iodine by using coloration caused by an iodine-starch reaction. Specifically, under the weakly acidic conditions (for example, in acetic acid), hypochlorite ions oxidize potassium iodide to generate I₂ (the following (1)). Using a starch solution as an indicator, I₂ thereof is titrated with sodium thiosulfate (the following (2)). Since the molar quantity of iodine is equivalent to the molar quantity of chlorine, the chlorine concentration can be calculated from the molar quantity of iodine (the molar quantity of hypochlorous acid).

ClO⁻ + 2KI + 2CH₃COOH → H₂O + 2CH₃COOK + Cl⁻ + I₂ (1)

I₂ + 2Na₂S₂O₃ → 2NaI + Na₂S₄O₆ (2)

### PRIOR ART DOCUMENT

### PATENT DOCUMENT

Patent Document 1: JP S62-134558 A

### SUMMARY OF THE INVENTION

### PROBLEMS TO BE SOLVED BY THE INVENTION

However, the titration method requires a person's visual work to stop the titration when the color changes, and thus the accuracy is poor. Since the chlorine concentration is measured, when ions other than hypochlorite ions, for example, chloride ions, chlorite ions, perchlorate ions, and the like are contained in a measurement sample, the concentration of hypochlorite ions themselves cannot be measured. In particular, when hypochlorous acid water is left for a long time, hypochlorite ions may be decomposed into chloride ions and the like over time, and thus it is required to measure the concentration of hypochlorite ions in a sample at that time.

As a general method for directly measuring a specific ion, ion-exchange chromatography is widely used. However, hypochlorite ions are less likely to be adsorbed and retained on conventional ion exchange columns and are less likely to be detected as peaks in the chromatogram. Specifically, since hypochlorite ions are eluted from the column in a short time, the peak of hypochlorite ions is swallowed by a water dip (a negative peak caused by the influence of water) that appears first in the chromatogram, and cannot be appropriately detected. Therefore, currently, a measuring instrument for quantifying hypochlorite ions is not provided.

An object of the present invention is to provide a novel method capable of measuring a hypochlorite ion in a measurement sample.

### MEANS FOR SOLVING THE PROBLEMS

A measurement method of a first aspect of the present invention is a method for measuring a measurement sample containing a hypochlorite ion by liquid chromatography mass spectrometry, the measurement method including selecting a mass chromatogram indicating the presence of a hypochlorite ion-derived iron complex from a plurality of mass chromatograms obtained by liquid chromatography mass spectrometry to determine an abundance of the hypochlorite ion.

### EFFECTS OF THE INVENTION

According to the measurement method of the first aspect, the hypochlorite ion in the measurement sample can be measured.

### BRIEF DESCRIPTION OF THE DRAWINGS

FIG. 1 shows a mass spectrum detected in Examples.
FIG. 2 is a partially enlarged view of the mass spectrum of FIG. 1.
FIG. 3 is a partially enlarged view of the mass spectrum of FIG. 1.
FIG. 4 is a partially enlarged view of the mass spectrum of FIG. 1.
FIG. 5 shows a mass chromatogram detected in Examples.
FIG. 6 shows a mass chromatogram detected in Examples.
FIG. 7 shows a mass chromatogram detected in Examples.
FIG. 8 shows a mass chromatogram detected in Examples.
FIG. 9 shows a mass chromatogram detected in Examples.
FIG. 10 shows a graph of a calibration curve prepared in Examples.
FIG. 11 shows a mass chromatogram when measurement samples of Examples were subjected to simultaneous analysis.

### MODES FOR CARRYING OUT THE INVENTION

### 1. First aspect

A measurement method of a first aspect of the present invention is a method for measuring a hypochlorite ion, in which a measurement sample is measured using liquid chromatography mass spectrometry. Specifically, a liquid chromatography step and a mass spectrometry step are sequentially performed. Hereinafter, each step will be described in detail.

### (Liquid chromatography step)

In this step, a measurement sample is prepared, and liquid chromatography is performed.

First, a measurement sample is prepared. The measurement sample is a solution containing hypochlorite ion (ClO⁻) or hypochlorous acid (HClO), and specific examples thereof include hypochlorous acid-based aqueous solutions such as hypochlorous acid water and sodium hypochlorite water. The hypochlorous acid water may be any of strongly acidic hypochlorous acid water, weakly acidic hypochlorous acid water, slightly acidic hypochlorous acid water, and the like. In the hypochlorous acid water, hypochlorous acid and hypochlorite ions are mixed, and the abundance ratio of the hypochlorous acid and the hypochlorite ions changes as appropriate depending on the pH. The measurement sample may appropriately contain various additives and solvents in addition to the above components depending on the intended use of the measurement sample.

In liquid chromatography, the measurement sample is mixed with an eluent (mobile phase) and passed through a column to separate the measurement sample. In the first aspect, a known liquid chromatograph mass spectrometer (LC-MS) may be used to perform liquid chromatography mass spectrometry. Specifically, for example, LCMS-9030 and LCMS-8060 manufactured by SHIMADZU CORPORATION, Orbitrap LC-MS manufactured by Thermo Fisher, and the like are commercially available.

Examples of the eluent include an organic solvent. Examples of the organic solvent include acetonitrile, methanol, ethanol, isopropanol, acetone, chloroform, and tetrahydrofuran. These organic solvents can be used singly or in combination of two or more kinds thereof. Preferably, acetonitrile is exemplified. As a result, a hypochlorite ion-derived iron complex can be formed and detected more reliably.

The eluent is preferably a mixed solvent of the organic solvent and an aqueous solution containing a salt. The aqueous solution is preferably neutral to basic, more preferably a weak base. The pH is, for example, 7 or more and preferably 7.5 or more, and is, for example, 9 or less and preferably 8 or less. The salt contained in the aqueous solution is not limited as long as it is neutral or basic, and examples thereof include ammonium acetate, ammonium formate, and aqueous ammonia, and ammonium acetate is preferable. By using such a mixed liquid as an eluent, the measurement sample can be made neutral or basic, and hypochlorous acid in the measurement sample can be ionized (equilibrium shift) to hypochlorite ions, and hypochlorite ions that can be present in the measurement sample can be reliably held and separated on a column and detected as a peak of a mass spectrum. The content of the salt in the mixed solvent is, for example, 1 mmol/L or more and preferably 10 mmol/L or more, and is, for example, 1000 mmol/L or less and preferably 100 mmol/L or less.

As the column equipped in the liquid chromatograph, an ion exchange column is preferably used. That is, in the first aspect, ion-exchange chromatography is preferably employed as the liquid chromatography. Examples of the stationary phase in the ion exchange column include an anion exchanger and a cation exchanger, and preferably include an anion exchanger. Since the hypochlorite ion-derived iron complex is an anion, the iron complex can be reliably held in the column. Note that, the ion exchange column of the first aspect includes a mixed-mode column using a reversed-phase column in combination with an ion exchanger column. In addition to the ion exchange column, for example, a hydrophilic interaction chromatograph (HILIC) column can be used.

Examples of the anion exchanger include a carrier having a quaternary ammonium group, a diethylaminoethyl group, or the like as a functional group. From the viewpoint of a stronger holding force, a carrier having a quaternary ammonium group is preferable. Examples of the carrier include silica beads, acrylic beads, and agarose-based beads. As a column including such an anion exchanger, for example, SYPRON series (registered trademark) manufactured by GL Sciences Inc., SHODEX series (registered trademark) manufactured by Showa Denko K.K., and the like are commercially available.

### (Mass spectrometry step)

In this step, mass spectrometry is performed on a measurement solution (eluate) separated by the liquid chromatography step. That is, the measurement solution discharged from the column is continuously measured with a mass spectrometer.

The mass spectrometer disposed behind the liquid chromatograph of the liquid chromatography mass spectrometer includes an ionization unit, a mass separation unit, and a detection unit in this order.

In the ionization unit, the separated measurement sample is ionized. Examples of the ionization means include electron ionization (EI), electrospray ionization (ESI), and atmospheric pressure chemical ionization (APCI).

In the mass separation unit, only ions having a desired mass-to-charge ratio in the ionized measurement sample are separated and allowed to pass therethrough. Examples of the type of the mass separation unit include a quadrupole type, a magnetic field sector type, a time-of-flight type, an ion trap type, and an ion cyclotron resonance type. The mass separation unit may be a tandem mass spectrometry type including a plurality of mass separation units. That is, in the first aspect, liquid chromatography tandem mass spectrometry may be employed. Examples of the tandem mass spectrometry type include a triple quadrupole type (Q-Q), a tandem time-of-flight type (TOF-TOF), a quadrupole-time-of-flight type (Q-TOF), a quadrupole-ion trap type (Q-IT), a quadrupole-ion cyclotron resonance type (Q-ICR), and an ion trap-time-of-flight type (IT-TOF).

In the case of using a liquid chromatography tandem mass spectrometer, a fragment generation unit is installed between two mass separation units. Examples of the means of the fragment generation unit include collision-induced dissociation, electron-transfer dissociation, electron-capture dissociation, infrared multiphoton dissociation, ultraviolet photon dissociation, and surface-induced dissociation. The collision energy (CE) may be appropriately determined according to desired precursor ions and product ions.

In the detection unit, ions (precursor ions, product ions, and the like) having passed through the mass separation unit are sequentially detected. As a detection result, a total ion chromatogram, a plurality of mass chromatograms (mass chromatograms), and a plurality of mass spectra are obtained.

The plurality of mass chromatograms are obtained for different mass-to-charge ratios (m/z). In the first aspect, a mass chromatogram indicating the presence of a hypochlorite ion-derived iron complex is selected from a plurality of mass chromatograms, and the abundance of the hypochlorite ion is determined.

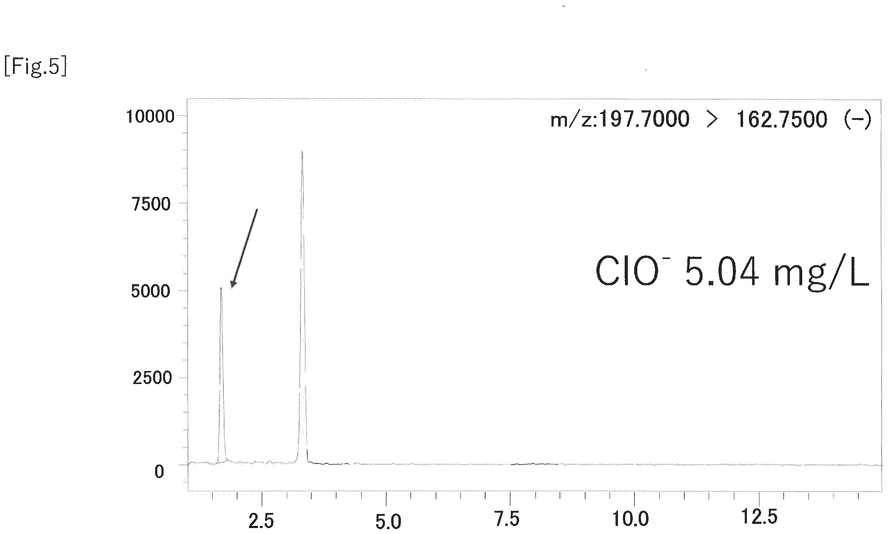

As the hypochlorite ion-derived iron complex, for example, a complex in which the ligand is Cl, preferably a tetracoordinate complex in which the ligand is Cl, most preferably FeCl₄⁻ is selected. That is, it is particularly preferable to select a mass chromatogram indicating the presence of FeCl₄⁻, specifically, a mass chromatogram in which the setting of the mass separation unit is near m/z = 197 (see FIG. 5 and the like of Examples).

In the case of employing a liquid chromatography tandem mass spectrometry type, it is sufficient that the setting of one of a first mass separation unit and a second mass separation unit includes near m/z = 197, but the setting of the first mass separation unit for extracting precursor ions is set to near m/z = 197. At this time, the condition of the second mass separation unit for extracting product ions is not limited, but may be set to, for example, near m/z=162 at which FeCl₃⁻ can be detected. That is, the liquid chromatography tandem mass spectrometer is set to the multiple reaction monitoring mode, the first mass separation unit is set to near m/z = 197, and the second mass separation unit is set to near m/z = 162. As a result, only fragmented ions (FeCl₃⁻) decomposed from FeCl₄⁻ can be detected, and FeCl₄⁻ can be accurately measured. Note that, in the first aspect, "near" indicates a series of mass spectrum ranges obtained by the isotope peak.

Next, in the mass chromatogram, a peak corresponding to the hypochlorite ion-derived iron complex (particularly, FeCl₄⁻) is regarded as a peak of the hypochlorite ion, and the abundance of the hypochlorite ion is determined based on the peak intensity. Note that, when a plurality of peaks in the mass chromatogram are detected, for example, a peak derived from a known ion (for example, chloride ion) is excluded, and then a peak (specifically, a peak detected at an elution time of 1 to 2 minutes, particularly 1.6 minutes) at a point where the elution time is the earliest may be taken as the peak of the hypochlorite ion-derived iron complex.

For the determination of the abundance, for example, a calibration curve is used. Specifically, (1) a plurality of sample solutions each containing a hypochlorite ion and having a known concentration are prepared, (2) the sample solution having each known concentration is subjected to liquid chromatography mass spectrometry to obtain a mass chromatogram indicating the presence (near m/z = 197) of a hypochlorite ion-derived iron complex for each known concentration, and (3) a calibration curve graph plotting a relationship between each known concentration and a peak intensity area of each mass chromatogram is created from the mass chromatogram. Then, (4) a target measurement solution (concentration unknown) is subjected to liquid chromatography mass spectrometry in the same manner, and then the peak intensity area of the obtained mass chromatogram is applied to the calibration curve graph to calculate the abundance. As a result, the hypochlorite ion concentration in the measurement sample can be quantified. A known or conventional numerical correction may be performed as appropriate.

The first aspect is a method for measuring a hypochlorite ion-containing measurement sample by liquid chromatography mass spectrometry, the measurement method including selecting a mass chromatogram indicating the presence of a hypochlorite ion-derived iron complex from a plurality of mass chromatograms obtained by liquid chromatography mass spectrometry to determine an abundance of the hypochlorite ion. As a result, the concentration of hypochlorite ions in the measurement sample (that is, hypochlorite ions (ClO⁻) dissociated in the measurement sample) can be directly quantified. Specifically, the hypochlorite ion concentration of the sodium hypochlorite water can be measured. In addition thereto, the hypochlorite ion concentration can be converted into the hypochlorous acid concentration by a known method, and the hypochlorous acid concentration of hypochlorous acid water and the like can also be measured. Since the measurement is performed using a liquid chromatograph mass spectrometer, the person's visual work to stop the titration when the color changes is not required, and as a result, accurate measurement can be performed. Since an automatable liquid chromatograph mass spectrometer can be used, the measurement can be automated. Since the measurement can be performed by injecting the measurement sample into the liquid chromatograph mass spectrometer, it is possible to perform simple measurement without requiring pretreatment of the measurement sample. Since the mass spectrometry is performed, it is possible to simultaneously analyze a measurement sample further containing a chloride ion (Cl⁻), chlorite ion (ClO₂⁻), chlorate ion (ClO₃⁻), perchlorate ion (ClO₄⁻), other halogen-based ions (Br⁻, BrO₂⁻), and the like, which can be quantified conventionally, together with a hypochlorite ion.

The first aspect is invented based on the fact that hypochlorous acid or an ion thereof forms a complex with iron of an iron product constituting a channel of a liquid chromatograph mass spectrometer, and the iron complex can be selectively detected by the mass spectrometer. Specifically, the inventors have found that in the analyzer, FeCl₄⁻ is formed by hypochlorite ions and an iron component present in the analyzer, and this iron complex can be selectively confirmed by the mass spectrometer, and thus is detected in the analysis result (total ion chromatogram, mass chromatogram, and mass spectrum). The inventors have also found that the FeCl₄⁻ is not formed for other chlorine-based components (a chloride ion, a chlorite ion, a chlorate ion, and a perchlorate ion), and has a correlation with the amount of hypochlorite ions in the measurement sample. The first aspect is invented based on such findings, but is not limited to the above specific examples.

### (Simultaneous analysis)

In the measurement method in the first aspect, a chloride ion, a chlorite ion, a chlorate ion, and a perchlorate ion can be simultaneously analyzed in addition to a hypochlorite ion. That is, the measurement is performed when the measurement sample further contains at least one of a chloride ion, a chlorite ion, a chlorate ion, and a perchlorate ion and it is desired to quantify these ions.

In this case, mass chromatograms indicating the presence of a chloride ion, a chlorite ion, a chlorate ion, and a perchlorate ion as well as the mass chromatogram indicating the presence of a hypochlorite ion-derived iron complex are selected from a plurality of mass chromatograms obtained in the mass spectrometry step. Specifically, since m/z is near 35 for a chloride ion, m/z is near 67 for a chlorite ion, m/z is near 83 for a chlorate ion, and m/z is near 99 for a perchlorate ion, mass chromatograms corresponding to these are selected, and the abundance of these ions is determined based on each mass chromatogram. The abundance of each ion is determined by preparing a calibration curve for each ion and calculating the abundance, similarly to the determination of hypochlorite ions. Note that, at this time, preferably, a single ion monitoring (SIM) mode is selected for a chloride ion, and a multiple reaction monitoring (MRM) mode is selected for a chlorite ion, a chlorate ion, a perchlorate ion, and the like.

### 2. Aspects

It is understood by those skilled in the art that the exemplary embodiments described above are specific examples of the following aspects.

(Clause 1) A hypochlorite ion measurement method according to an aspect is a method for measuring a measurement sample containing a hypochlorite ion by liquid chromatography mass spectrometry, the measurement method including selecting a mass chromatogram indicating the presence of a hypochlorite ion-derived iron complex from a plurality of mass chromatograms obtained by liquid chromatography mass spectrometry to determine an abundance of the hypochlorite ion.

(Clause 2) In the measurement method described in clause 1, an eluent used in the liquid chromatography mass spectrometry may be a mixed solvent of an aqueous solution containing a salt and an organic solvent.

(Clause 3) In the measurement method described in clause 2, the organic solvent may contain acetonitrile.

(Clause 4) In the measurement method described in any one of clauses 1 to 3, the hypochlorite ion-derived iron complex may be FeCl₄⁻.

(Clause 5) In the measurement method described in any one of clauses 1 to 4, each mass chromatogram indicating the presence of a chloride ion, a chlorite ion, a chlorate ion, and a perchlorate ion may be further selected, and these ions may be simultaneously analyzed.

### EXAMPLES

The present invention will be described in detail with reference to Examples; however, the scope of the present invention is not limited thereto.

### 1. Preparation of aqueous sodium hypochlorite solution

322.6 mg of sodium hypochlorite pentahydrate (manufactured by FUJIFILM Wako Pure Chemical Corporation) was dissolved in water and the volume was adjusted to 100 mL to prepare a standard solution having a ClO⁻ concentration of 1008.8 mg/L. This standard solution was further diluted with water to prepare solutions of 5.04 mg/L, 10.09 mg/L, 25.22 mg/L, 50.44 mg/L, and 100.88 mg/L.

### 2. Preparation of other ion standard samples

For each of a chloride ion, a chlorite ion, and a chlorate ion, a 1000 mg/L standard solution for ion chromatography (manufactured by FUJIFILM Wako Pure Chemical Corporation) was diluted with water to prepare a 50 mg/L ion standard solution. With respect to a perchlorate ion, sodium perchlorate was dissolved in water to prepare a standard solution having perchlorate ions of 10 mg/L.

### <Example 1>

A high performance liquid chromatograph mass spectrometer (trade name "LCMS-9030", quadrupole-time-of-flight mass type mass spectrometer, and "LCMS-8050", a triple quadrupole type mass spectrometer, manufactured by SHIMADZU CORPORATION) was used. As a column to be loaded into the apparatus, an ion exchange column (trade name "SYPRON AX-1", manufactured by GL Sciences Inc., 100 mm × 2.1 mm I.D., particle size: 5.0 µm, functional group: quaternary ammonium group, counter ion: Cl⁻, carrier: methacrylate polymer) was used. The measurement conditions were set as follows.

### (Liquid chromatography)

Mobile phase: (A) 25 mmol/L aqueous ammonium acetate solution
(B) Acetonitrile
A/B = 70/30 (pump flow rate mixing)
Flow rate: 0.200 mL/min
Column temperature: 40°C
Inflow amount: 0.5 pL
Rinse liquid: Water/acetonitrile = 50/50

### (Mass Spectrometry)

Ionization mode: ESI(-)
Interface voltage: 3.0 kV
Nebulizer gas flow rate: 2.0 L/min
Drying gas flow rate: 10.0 L/min
Heat block temperature: 300°C
DL temperature: 150°C
Interface temperature: 300°C
Heating gas flow rate: 10.0 L/min
Measurement mode: [Single ion monitoring (SIM)/chloride ion], [Multiple reaction monitoring (MRM)/FeCl₄⁻, chlorite ion, chlorate ion, perchlorate ion]

(1) Confirmation of presence of FeCl₄⁻ complex

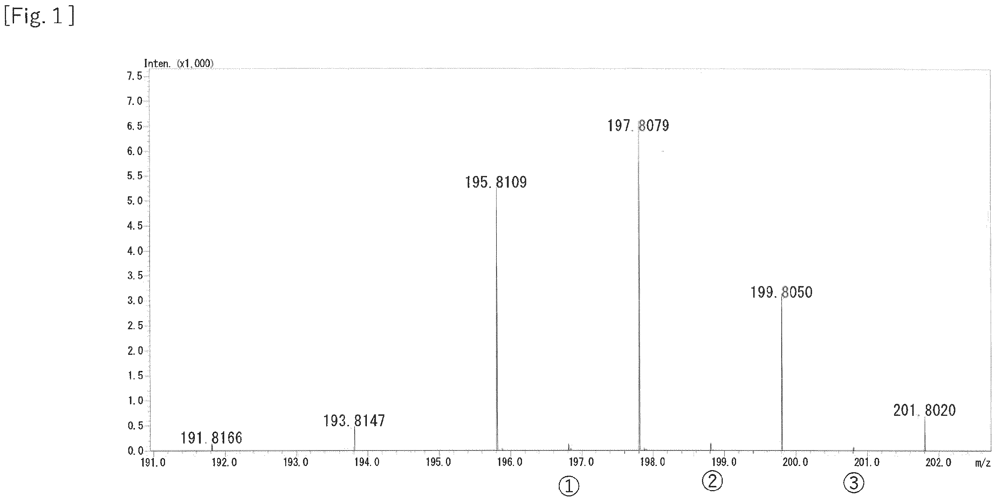

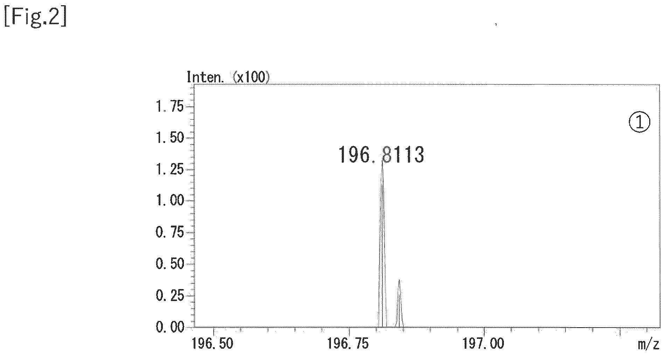

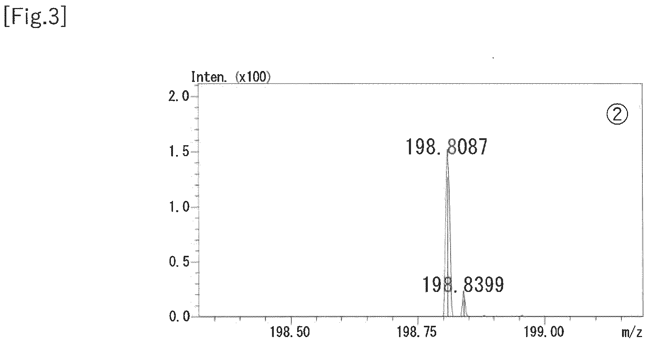

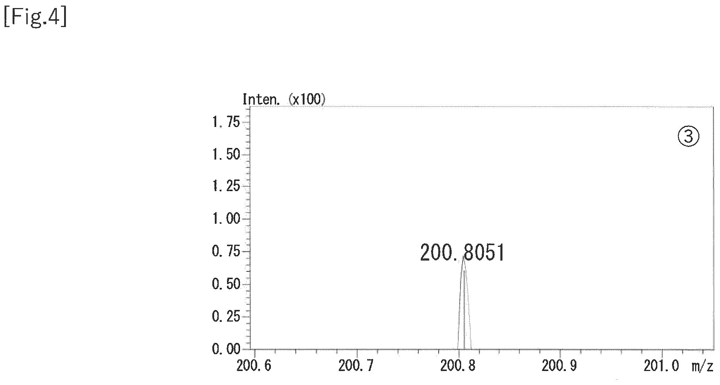

The measurement was performed under the above concentrations using an aqueous sodium hypochlorite solution having a concentration of 50.44 mg/L as a measurement sample. The mass spectrum at this time is shown in FIG. 1, and a partially enlarged view thereof is shown in FIGS. 2 to 4.

Atomic weight data provided by National Institute of Standards and Technology (NIST) is shown below in Table 1. The theoretical FeCl₄⁻ mass spectrum obtained from Table 1 was confirmed using LabSolutions Insight Explore manufactured by SHIMADZU CORPORATION, and the theoretical mass spectrum was collated with the measured mass spectrum in FIGS. 1 to 4 to find that both spectra were coincident with each other. Therefore, it is found that a FeCl₄⁻ complex was formed and detected.

**[Table 1]**

| Atomic Weights and Isotopic Compositions with Relative Atomic Masses(NIST) | | | |
|---|---|---|---|
| | Isotope | Monoisotopic mass | Natural abundance |
| Cl | Cl35 | 34.968 852 682(37) | 0.7576(10) |
| | Cl37 | 36.965 902 602(55) | 0.2424(10) |
| Fe | Fe54 | 53.939 608 99(53) | 0.05845(35) |
| | Fe56 | 55.934 936 33(49) | 0.91754(36) |
| | Fe57 | 56.935 392 84(49) | 0.02119(10) |
| | Fe58 | 57.933 274 43(53) | 0.00282(4) |

Also for a chloride ion, a chlorite ion, a chlorate ion, and a perchlorate ion, the measurement was performed using each standard solution by liquid chromatography mass spectrometry in the same manner as described above, mass spectrum was detected, and as a result, a peak as shown in FIG. 1 could not be confirmed near m/z = 197.7. Therefore, an iron complex was not formed from a chloride ion, a chlorite ion, a chlorate ion, or a perchlorate ion. From the above, it is found that the FeCl₄⁻ complex is derived only from hypochlorite ions and is an iron complex formed in the mobile phase in liquid chromatography mass spectrometry.

### (2) Quantification of hypochlorite ion

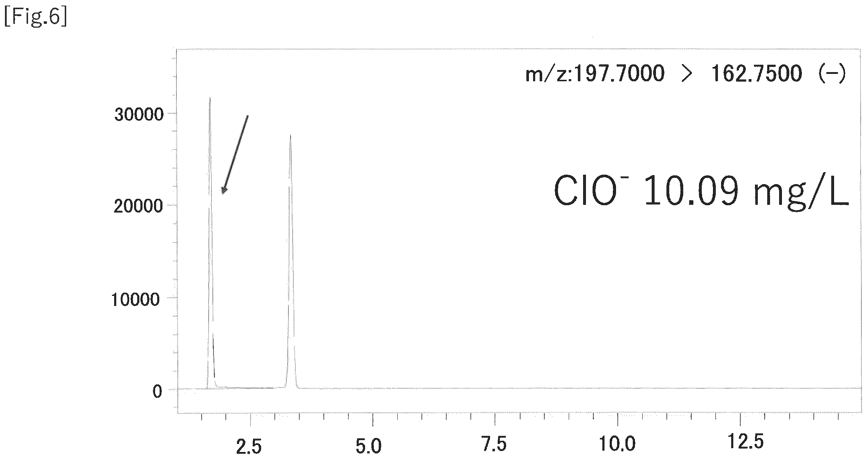

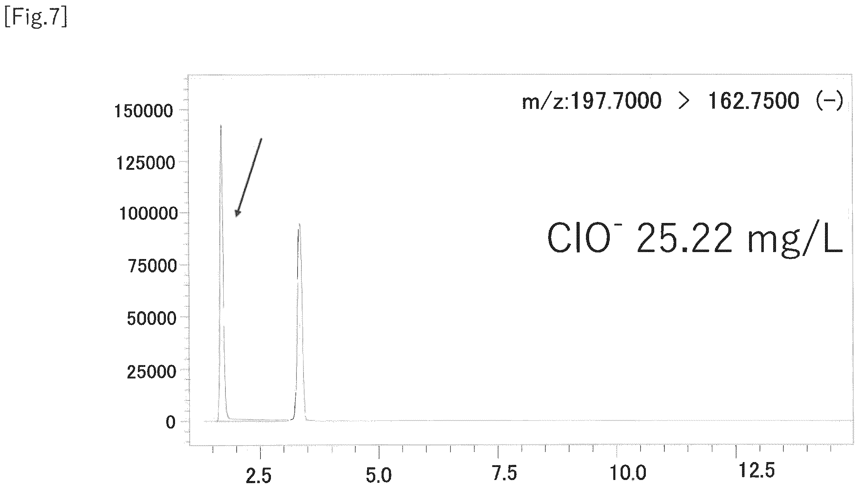

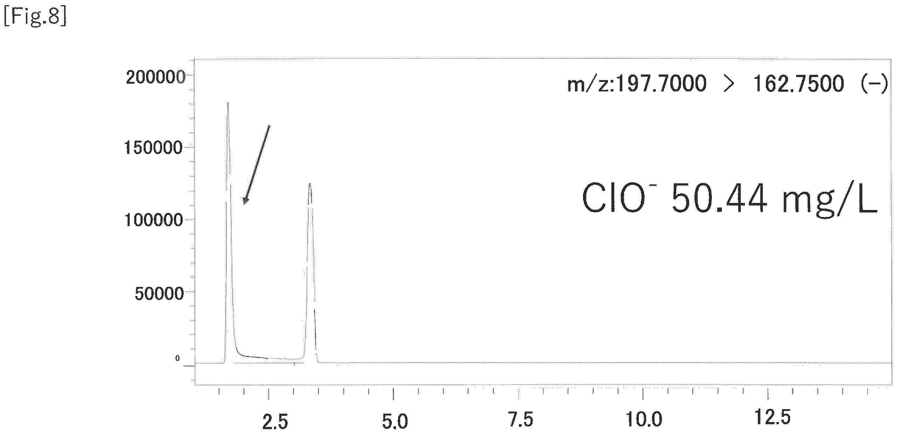

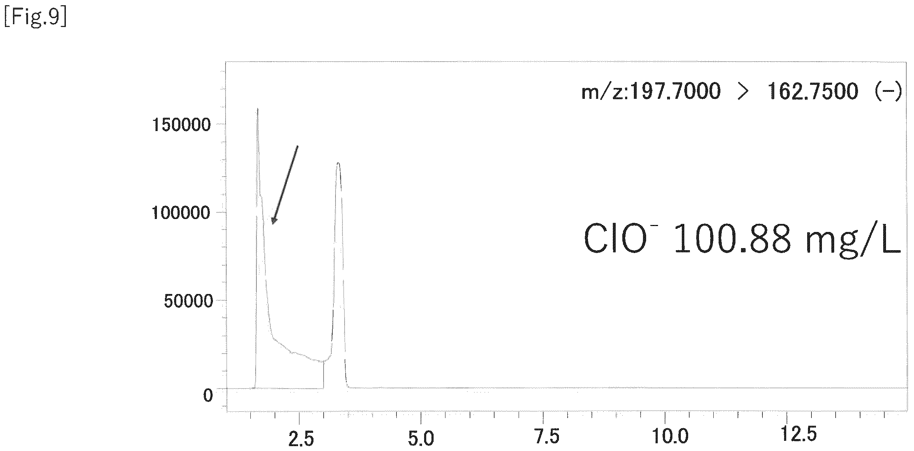

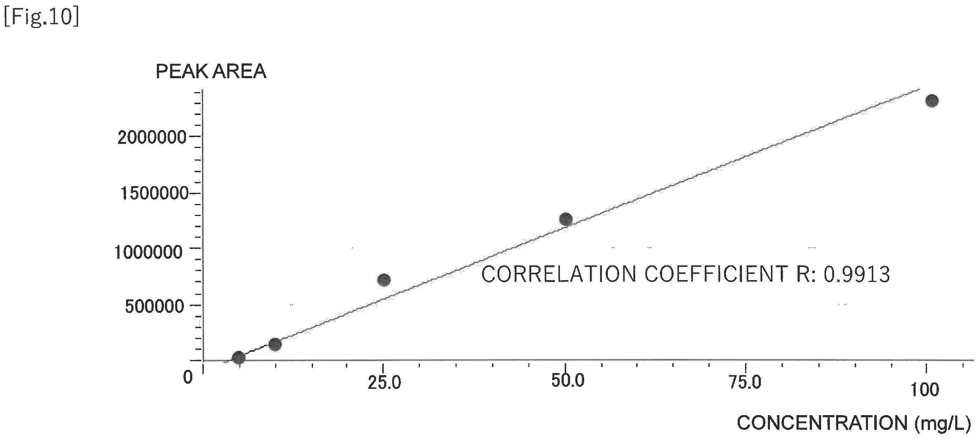

The measurement was performed under the above conditions using aqueous sodium hypochlorite solutions having the above five concentrations as measurement samples. Mass chromatograms detected with the first mass separation unit set to m/z = 197.70 and the second mass separation unit set to m/z = 162.75 were shown in FIGS. 5 to 9. The relationship between each concentration and the peak intensity area per 1.6 minutes of the elution time was plotted as a calibration curve in FIG. 10. As a result, a correlation coefficient R of the primary straight line formed from each plot was a very high numerical value of 0.9913, and the peak intensity of the FeCl₄⁻ complex detected was proportional to the hypochlorite ion concentration. This shows that hypochlorite ions can be quantitatively analyzed using the obtained calibration curve.

### (3) Simultaneous analysis

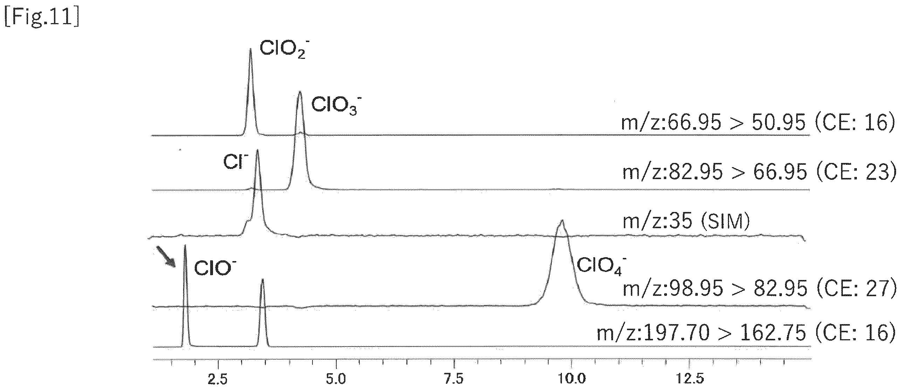

A hypochlorite ion solution (50.44 mg/L), a chloride ion standard solution, a chlorite ion standard solution, a chlorate ion standard solution, and a perchlorate ion standard solution were mixed at the same concentration level to prepare a solution for simultaneous analysis. This was measured by liquid chromatography mass spectrometry in the same manner as described above. The mass chromatogram which is the detection result is shown in FIG. 11. As a result, since the respective ion peaks are clearly separated and detected, it is found that these components can be simultaneously analyzed.

### (4) Measurement of commercially available hypochlorous acid water

When a commercially available hypochlorous acid water (effective chlorine concentration: indicated value 200 mg/L) was measured by the same method as described above, the quantitative value as a hypochlorite ion was 114.2 mg/L as a hypochlorite ion concentration in a stock solution. The effective chlorine concentration measured value by an iodine titration method was 194.2 mg/L.

From the effective chlorine concentration by the titration method to the hypochlorite ion concentration, about 70 to 80% of the effective chlorine concentration measurement value by the titration method is estimated to be the hypochlorite ion concentration based on the chemical reaction formula related to the effective chlorine concentration measurement. In this method, a concentration value of about 85% is shown with respect to this estimated value, and it can be determined that the hypochlorite ion concentration can be evaluated from a practical viewpoint.

## Claims

1. A hypochlorite ion measurement method for measuring a measurement sample containing a hypochlorite ion by liquid chromatography mass spectrometry, the measurement method comprising selecting a mass chromatogram indicating a presence of a hypochlorite ion-derived iron complex from a plurality of mass chromatograms obtained by liquid chromatography mass spectrometry to determine an abundance of the hypochlorite ion.

2. The measurement method according to claim 1, wherein an eluent used in the liquid chromatography mass spectrometry is a mixed solvent of an aqueous solution containing a salt and an organic solvent.

3. The measurement method according to claim 2, wherein the organic solvent contains acetonitrile.

4. The measurement method according to claim 1, wherein the hypochlorite ion-derived iron complex is FeCl₄⁻.

5. The measurement method according to claim 1, wherein each mass chromatogram indicating the presence of a chloride ion, a chlorite ion, a chlorate ion, and a perchlorate ion is further selected, and these ions are simultaneously analyzed.
